(19) Europäisches Patentamt
European Patent Office
Office européen des brevets

(11) EP 2 928 928 B1

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(21) Anmeldenummer: **13801573.0**

(22) Anmeldetag: **05.12.2013**

(51) Int Cl.:
***C08F 8/02*** *(2006.01)* ***C08F 2/42*** *(2006.01)*
***C08F 110/10*** *(2006.01)* ***C08F 8/10*** *(2006.01)*

(86) Internationale Anmeldenummer:
**PCT/EP2013/075618**

(87) Internationale Veröffentlichungsnummer:
**WO 2014/090672 (19.06.2014 Gazette 2014/25)**

(54) **VERFAHREN ZUR HERSTELLUNG VON FUNKTIONALISIERTEN POLYISOBUTENEN UND DERIVATE DAVON**

METHOD FOR PRODUCING FUNCTIONALIZED POLYISOBUTYLENES AND DERIVATIVES THEREOF

PROCÉDÉ DE PRÉPARATION DE POLYISOBUTÈNES FONCTIONNALISÉS, ET LEURS DÉRIVÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2012 US 201261735075 P**
**10.12.2012 EP 12196265**

(43) Veröffentlichungstag der Anmeldung:
**14.10.2015 Patentblatt 2015/42**

(73) Patentinhaber: **BASF SE**
**67056 Ludwigshafen am Rhein (DE)**

(72) Erfinder:
- **LANGE, Arno**
  **67098 Bad Dürkheim (DE)**
- **CSIHONY, Szilard**
  **69517 Gorxheimertal (DE)**
- **KLEINER, Matthias**
  **67161 Gönnheim (DE)**

(74) Vertreter: **BASF IP Association**
**BASF SE**
**G-FLP-C006**
**67056 Ludwigshafen (DE)**

(56) Entgegenhaltungen:
**US-A1- 2005 107 551**

- **DAVID L MORGAN ET AL: "End-Quenching of TiCl4-Catalyzed Quasiliving Polyisobutylene with Alkoxybenzenes for Direct Chain End Functionalization", MACROMOLECULES, AMERICAN CHEMICAL SOCIETY, Bd. 43, Nr. 21, 9. November 2010 (2010-11-09), Seiten 8724-8740, XP001559000, ISSN: 0024-9297, DOI: 10.1021/MA1015648**
- **J. M. ROONEY: "Synthesis of phenol-terminated polyisobutylene: Competitive chain transfer reactions", JOURNAL OF APPLIED POLYMER SCIENCE, Bd. 25, Nr. 7, 1. Juli 1980 (1980-07-01), Seiten 1365-1372, XP055108330, ISSN: 0021-8995, DOI: 10.1002/app.1980.070250710**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von funktionalisierten Polyisobutenen sowie nach dem Verfahren erhältliche funktionalisierte Polyisobuten-Polyethylenoxid-Blockcopolymere. Homo- und Copolymere des Isobutens finden in vielfältiger Weise Verwendung, beispielsweise zur Herstellung von Kraftstoff- und Schmierstoff-Additiven, als Elastomere, als Klebstoffe oder Klebrohstoffe oder als Grundbestandteil von Dichtungs- und Versiegelungsmassen.

Die Herstellung von Polyisobutenen (PIB) durch lebende kationische Polymerisation von Isobuten ist bekannt. Als lebende kationische Polymerisation bezeichnet man allgemein die Polymerisation von Iso-Olefinen oder Vinylaromaten in Gegenwart von Metall- oder Halbmetallhalogeniden als Lewis-Säure-Katalysatoren und tert.-Alkylhalogeniden, Benzyl- oder Allylhalogeniden, -estern oder -ethern als Initiatoren, welche mit der Lewis-Säure ein Carbokation oder einen kationogenen Komplex bilden. Eine umfassende Übersicht hierzu findet man in Kennedy/Ivan, "Carbocationic Macromolecular Engineering", Hauser Publishers 1992.Ein Vorteil der lebenden kationischen Polymerisation ist, dass Polyisobutene mit relativ engen Molekulargewichtsverteilungen erhalten werden. Versuche der Anmelderin haben jedoch gezeigt, dass die Anwendung der bekannten Verfahren des Standes der Technik auf die Polymerisation von Isobuten zu mittelmolekularen Polyisobutenen, d.h. zu Polyisobutenen mit einem zahlenmittleren Molekulargewicht Mn von 300 bis 30.000, vor allem 2.000 bis 20.000, insbesondere von 3.000 bis 16.000 und speziell von 5.000 bis 11.000, nicht zu einer ausreichend engen Molekulargewichtsverteilung führt. Dies ist insbesondere dann der Fall, wenn wirtschaftlich interessante Polymerisationsbedingungen angewandt werden, z.B. wenn anstelle des teuren und bei Raumtemperatur gasförmigen Bortrichlorids das kostengünstigere und leichter zu handhabende Titantetrachlorid eingesetzt wird.

David L Morgan et al. offenbaren ein Verfahren zur Herstellung von funktionalisierten Polyisobutenen (PIB), bei dem man Isobuten polymerisiert und danach mit einem Gemisch aus 2,6-Tert-butylphenol und $TiCl_4$ abgebrochen wird (David L. Morgan et al.: End-Quenching of TiCl4-catalyzed Quasiliving Polyisobutene with Alkoxybenzenes for Direct Chain End Functionalzation. Macromolecules, American Chemical Society, Bd. 43, Nr.21, (2010-11-09), Seiten 8724 - 8740).

Polyisobutene, die mit mindestens einer - OH-Funktion terminiert sind, stellen wertvolle Zwischenprodukte zur Herstellung von Makromeren (Acrylate, Epoxide, Allylether) oder Polymeren (Polyurethane) dar. Es ist das Verdienst von Kennedy und Ivan, als erste eine Syntheseroute zu solchen Verbindungen über Boranaddition publiziert zu haben (Ivan, Kennedy, Chang; J.Polym. Sci. Polym. Chem. Ed. 18,3177 (1980)). Ohne die Reproduzierbarkeit der Kennedy'schen Angaben im industriechemischen Labor bezweifeln zu wollen, darf hier aber darauf hingewiesen werden, dass die Verwendung von Boranen zur Herstellung technischer Polymere zu aufwendig ist.

Weiterhin ist es bekannt, phenolterminierte Polyisobutene herzustellen. (US 2005/107551 A1 (Lang Gabriele et al.) und J.M.Rooney: Synthesis of phenol-terminated polyisobutylene: Competitive chain transfer reactions, Journal of Applied Polymer Science, Bd. 25, Nr. 7, (1980-07-01), Seiten 1365-1372)).

Dazu war bislang nach Literaturangaben (z.B.: Nguyen und Marechal, Polym.Bull. 11, S. 99-104 (1984), US4429099 (1984), US5300701 (1994)) und eigenen Versuchen der Anmelderin ein dreistufiges Verfahren notwendig:

1. Polymerisation des Isobuten und Abbruch, z.B. mit Alkoholen
2. Dehydrohalogenieren der erhaltenen Cl-terminierten Polymere zu den Olefinen
3. Umsetzung mit Phenol zu den Polyisobutenylphenolen

Diese Schritte sind umständlich und führen zu aufwendigen, mehrstufigen Verfahren, die insbesondere in der industriellen Praxis unerwünscht sind. Weiterhin verschlechtert sich die Produktqualität durch Dimerisierung in der Abbruchsreaktion 1, während in den Schritten 2 und 3 mit der unerwünschten partiellen Bildung nicht mehr reaktiver interner (tetrasubstituierter) Olefine zu rechnen ist.

Insbesondere für die Verwendung von funktionalisiertem und an den funktionellen Gruppen mit reaktiven Gruppen derivatisiertem PIB in Klebstoffen bzw. als Makromer in Klebstoffen sind PIB mit hohem Molekulargewicht Mn von Interesse, um durch einen erhöhten PIB-Anteil die gewünschten Anwendungseigenschaften (Klebeeigenschaften, mechanische Eigenschaften, Elastizität, Barrierewirkungen) zu verbessern.

Aufgabe der vorliegenden Erfindung war daher, ein einfaches Verfahren bereitzustellen, mit welchem mit Phenol funktionalisierte und vor allem bi- und polyfunktionelle Polyisobutene mit enger Molekulargewichtsverteilung (d.h. mit einem möglichst kleinen PDI-Wert; PDI = Mw/Mn; Mw = gewichtsmittleres Molekulargewicht, Mn = zahlenmittleres Molekulargewicht), möglichst hohem Molekulargewicht Mn und möglichst hoher Funktionalität (z.B. möglichst nahe an einer Funktionalität von 100%) ohne aufwendige Nachreaktionen erhältlich sind.

Es war überraschend, dass man mit geeigneten Verfahrensbedingungen und Katalysatoren die oben genannten Verfahrensschritte 1 bis 3 zusammenfassen kann, und unter Einsatz ansonsten industriell üblicher Verfahren und Stoffe Polyisobutenylphenole hergestellt werden können, welche die Aufgabe lösen.

Die Aufgabe wird gelöst durch das nachfolgend näher beschriebene Verfahren.

Gegenstand der Erfindung ist ein Verfahren zur Herstellung von funktionalisierten Poly-isobutenen, bei dem man Isobuten oder ein Isobuten-haltiges Monomerengemisch in Gegenwart einer Lewis-Säure und eines Initiators polymerisiert und wobei die Polymerisation mit einem Gemisch aus mindestens einem Phenol und mindestens einer Lewissäure und/oder mindestens einer Brönstedsäure abgebrochen wird, wobei optional die terminalen Phenolgruppen derivatisiert oder zu Cyclohexanolsystemen reduziert werden, und wobei zum
Reaktionsabbruch ein Phenol (I) der Formel

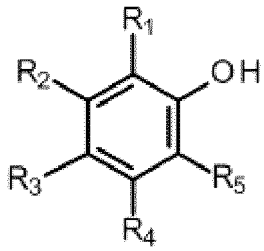

(I)

verwendet wird,
worin R1, R2, R3, R4, R5 gleich oder verschieden sind und für Wasserstoff, Alkyl oder Alkoxy stehen mit der Maßgabe, dass mindestens ein ortho- oder paraständiger Rest Wasserstoff ist, wobei wenn mehrere der Reste R1, R2, R3, R4, R5 für Alkyl stehen, dann ist Alkyl ein gesättigter, cyclischer Kohlenwasserstoffrest, oder Methyl, Ethyl, n-Propyl, Isopropyl, n-Butyl, sec-Butyl, Isobutyl, n-Pentyl, 2-Pentyl, 3-Pentyl, 2-Methylbutyl, 3-Methylbutyl, 3-Me-thylbut-2-yl, 2-Methylbut-2-yl, 2,2-Dimethylpropyl, n-Hexyl, 2-Hexyl, 3-Hexyl, 2-Me-thylpentyl, 2-Methylpent-3-yl, 2-Methylpent-2-yl, 2-Methylpent-4-yl, 3-Methylpent-2-yl, 3-Methylpent-3-yl, 3-Methylpentyl, 2,2-Dimethylbutyl, 2,2-Dimethylbut-3-yl, 2,3-Dimethyl-but-2-yl oder 2,3-Dimethylbutyl.

Durch das erfindungsgemäße Verfahren sind Isobuten-Polymere erhältlich, die an den Kettenenden / am Kettenende Phenolgruppen enthalten. Je nach Aufgaben können die terminalen Phenolgruppen auch derivatisiert werden, zum Beispiel verestert oder verethert sowie umgewandelt werden, zum Beispiel zu Cyclohexanolsystemen reduziert.

Gegenstand der Erfindung sind auch funktionalisierte Polyisobuten-Polyethylenoxid-Blockcopolymere, erhältlich nach dem erfindungsgemäßen Verfahren.

Im Folgenden wird die Bezeichnung (Meth)acrylat und ähnliche Bezeichnungen als abkürzende Schreibweise verwendet für Acrylat oder Methacrylat".

Im Folgenden werden unter Polyisobutenen auch Copolymere verstanden, wobei der Anteil an Isobuten an der Gesamtmenge an Monomeren mehr als 50 Gew.%, vorzugsweise mehr als 80 Gew.% beträgt.

Im Folgenden wird unter " derivatisiert" bzw. unter "Derivaten" verstanden, dass anstelle des H-Atoms der OH-Gruppe mindestens einer der Phenol-Endgruppen ein anderes Atom oder eine andere Atomgruppe vorhanden ist.

Beim Initiator handelt es sich um eine organische Verbindung, die wenigstens eine funktionelle Gruppe FG aufweist, welche unter Polymerisationsbedingungen mit der Lewis-Säure ein Carbokation oder einen kationogenen Komplex bilden kann. Die Begriffe "Carbokation" und "kationogener Komplex" sind nicht streng voneinander getrennt, sondern umfassen alle Zwischenstufen von solvens-getrennten Ionen, solvensgetrennten Ionenpaaren, Kontaktionenpaaren und stark polarisierten Komplexen mit positiver Partialladung an einem C-Atom des Initiatormoleküls, wobei vermutlich vor allem letztere Spezies vorliegt.

Als Initiatoren sind grundsätzlich alle organischen Verbindungen geeignet, die wenigstens eine nucleophil verdrängbare Abgangsgruppe X aufweisen und die eine positive Ladung oder Partial-Ladung an dem C-Atom, welches die Abgangsgruppe X trägt, stabilisieren können. Hierzu zählen bekanntermaßen Verbindungen, die wenigstens eine Abgangsgruppe X aufweisen, die an ein sekundäres oder tertiäres aliphatisches Kohlenstoffatom oder an ein allylisches oder benzylisches Kohlenstoffatom gebunden ist. Als Abgangsgruppen kommen dabei Halogen, Alkoxy, vorzugsweise $C_1$-$C_6$-Alkoxy, und Acyloxy (Alkylcarbonyloxy), vorzugsweise $C_1$-$C_6$-Alkylcarbonyloxy, in Betracht.

Halogen steht hier insbesondere für Chlor, Brom oder Iod und speziell für Chlor. $C_1$-$C_6$-Alkoxy kann sowohl linear als auch verzweigt sein, und steht beispielsweise für Methoxy, Ethoxy, n-Propoxy, Isopropoxy, n-Butoxy, Isobutoxy, n-Pentoxy und n-Hexoxy, insbesondere Methoxy. $C_1$-$C_6$-Alkylcarbonyloxy steht beispielsweise für Acetoxy, Propionyloxy, n-Butyroxy und Isobutyroxy, insbesondere Acetoxy.

Bevorzugt sind solche Initiatoren, worin die funktionelle Gruppe die allgemeine Formel FG

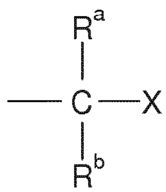

(FG)

aufweist, worin

X ausgewählt ist unter Halogen, $C_1$-$C_6$-Alkoxy und $C_1$-$C_6$-Acyloxy,
$R^a$ Wasserstoff oder Methyl bedeutet und
$R^b$ für Methyl steht, oder mit $R^a$ oder dem Molekülteil, an den die funktionelle Gruppe FG gebunden ist, einen $C_5$-$C_6$-Cycloalkylring bildet, $R^b$ auch Wasserstoff bedeuten kann, wenn die funktionelle Gruppe FG an ein aromatisches oder olefinisch ungesättigtes C-Atom gebunden ist.

Die Initiatoren weisen vorzugsweise eine, zwei, drei oder vier, insbesondere eine oder zwei und speziell eine funktionelle Gruppe FG auf. Bevorzugt steht X in Formel (FG) für ein Halogenatom, insbesondere für Chlor.
Bevorzugte Initiatoren gehorchen beispielsweise den allgemeinen Formeln I-A bis I-F:

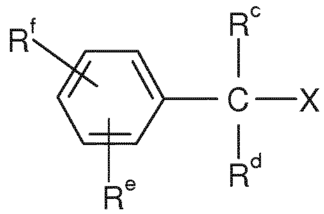

I-A

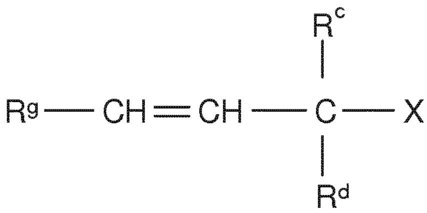

I-B

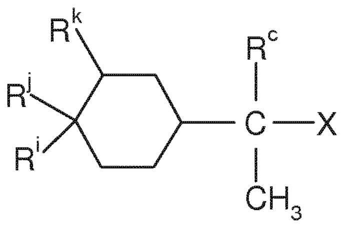

I-C

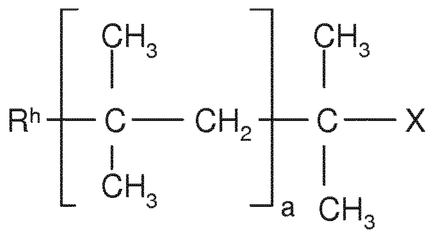

I-D

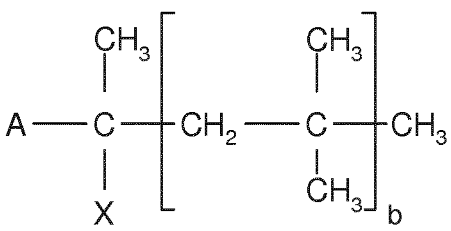

I-E

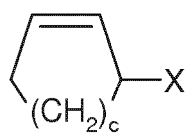

I-F

worin X die zuvor genannte Bedeutung hat;
a und b unabhängig voneinander für 0, 1, 2, 3, 4 oder 5 stehen;

c für 1, 2 oder 3 steht;

$R^c$, $R^d$ und $R^j$ unabhängig voneinander für Wasserstoff oder Methyl stehen; Re, $R^f$ und $R^g$ unabhängig voneinander für Wasserstoff, $C_1$-$C_4$-Alkyl oder eine Gruppe $CR^cR^d$-X stehen, worin $R^c$, $R^d$ und X die zuvor genannten Bedeutungen haben;

$R^h$ für Wasserstoff, Methyl oder ein Gruppe X steht;

$R^i$ und $R^k$ Wasserstoff oder eine Gruppe X bedeuten; und

A für einen ethylenisch ungesättigten Kohlenwasserstoffrest steht, der eine Vinylgruppe oder eine Cycloalkenylgruppe aufweist.

In den Formeln I-A bis I-C stehen $R^c$ und $R^d$ vorzugsweise beide für Methyl. In der Formel I-A steht $R^f$ beispielsweise für eine Gruppe $CR^cRd^4$-X, die in para- oder meta-Position zur $CR^cR^d$X-Gruppe angeordnet ist, insbesondere wenn Re Wasserstoff bedeutet. Sie kann sich auch in der meta-Position befinden, wenn die Gruppe Re für $C_1$-$C_4$-Alkyl oder eine Gruppe $CR^cR^d$-X steht. Bevorzugte Verbindungen I-A sind z. B.: 2-Chlor-2-phenylpropan sowie 1,4-Bis(2-chlor-2-propyl)benzol (1,4-Dicumylchlorid, 1,4-DCC) oder 1,3-Bis(2-chlor-2-propyl)benzol (1,3-Dicumylchlorid, 1,3-DCC).

Beispiele für Verbindungen der Formel I-B sind Allylchlorid, Methallylchlorid, 2-Chlor-2-methylbuten-2 sowie 2,5-Dichlor-2,5-dimethylhexen-3.

In den Verbindungen I-C steht $R^c$ vorzugsweise für Methyl. $R^i$ steht vorzugsweise für eine Gruppe X, und insbesondere für Halogen, insbesondere, wenn $R^j$ für Methyl steht. Beispiele für Verbindungen der allgemeinen Formel I-C sind 1,8-Dichlor-4-p-menthan (Limonendihydrochlorid), 1,8-Dibrom-4-p-menthan (Limonendihydrobromid), 1-(1-Chlorethyl-3-chlorcyclohexan, 1-(1-Chlorethyl-4-chlorcyclohexan, 1-(1-Bromethyl)-3-bromcyclohexan und 1-(1-Bromethyl)-4-bromcyclohexan.

Unter den Verbindungen der Formel I-D sind solche bevorzugt, in denen $R^h$ für eine Methylgruppe steht. Bevorzugt sind außerdem Verbindungen der allgemeinen Formel I-D, in denen $R^h$ für eine Gruppe X, und insbesondere ein Halogen-Atom, steht, wenn a > 0 ist.

In Verbindungen I-E steht A für einen Kohlenwasserstoffrest mit in der Regel 2 bis 21 C-Atomen, der entweder eine Vinylgruppe ($CH_2$=CH-) oder einen $C_5$-$C_8$-Cycloalkenylrest, z. B. Cyclopenten-3-yl, Cyclopenten-4-yl, Cyclohexen-3-yl, Cyclohexen-4-yl, Cyclohepten-3-yl, Cyclohepten-4-yl, Cycloocten-3-yl, Cycloocten-4-yl oder Cycloocten-5-yl, aufweist.

Vorzugsweise steht A für einen Rest der Formeln A.1, A.2 oder A.3

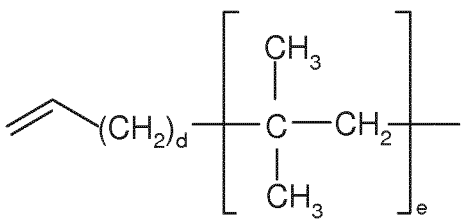

A.1

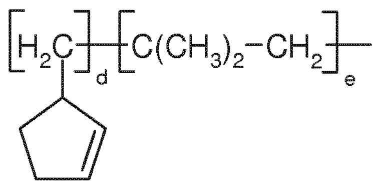

A.2

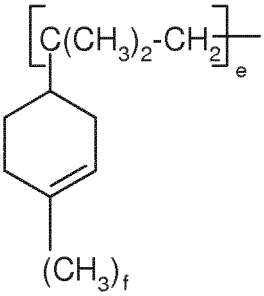

A.3

worin

- d für 0 oder 1 steht;
- e für eine Zahl von 0 bis 3, insbesondere 0, 1 oder 2 steht, und

f für 0 oder 1 steht.

In Verbindungen I-E mit A = A.2 steht d vorzugsweise für 1.
In Verbindungen I-E mit A = A.3 steht e vorzugsweise für 0. f steht vorzugsweise für 1. Beispiele für Initiator-Verbindungen I-E sind 2-Chlor-2-methylbuten-3, 2-Chlor-2-methylpenten-4, 2-Chlor-2,4,4-trimethylhexen-5, 2-Chlor-2-methyl-3-(cyclopenten-3-yl)-propan, 2-Chlor-2-methyl-4-(cyclohexen-4-yl)pentan und 2-Chlor-2-(1-methylcyclohexen-4-yl)propen.

In Verbindungen der Formel I-F steht X vorzugsweise für Chlor. c steht vorzugsweise für 1 oder 2 und besonders bevorzugt für 1. Eine bevorzugte Verbindung der Formel I-F ist 3-Chlorcyclopenten.

Besonders bevorzugt verwendet man Initiatoren der Formel I-A oder I-D und insbesondere solche der Formel I-D.

Die oben beschriebenen Initiatoren sowie Verfahren zu ihrer Herstellung sind bekannt und beispielsweise in der WO 02/48215, WO 03/074577 und WO 2004/113402 beschrieben, worauf hiermit in vollem Umfang Bezug genommen wird.

Als Lewis-Säure zur Auslösung der Polymerisation kommen kovalente Metallhalogenide und Halbmetallhalogenide, die eine Elektronenpaarlücke aufweisen, in Betracht. Derartige Verbindungen sind dem Fachmann bekannt, beispielsweise aus J.P. Kennedy et al. in US 4,946,889, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. Sie sind in der Regel ausgewählt unter Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumdichloride und die Dialkylaluminiumchloride. Bevorzugte Lewis-Säuren sind Titantetrachlorid, Bortrichlorid, Bortrifluorid, Zinntetrachlorid, Aluminiumtrichlorid, Vanadiumpentachlorid, Eisentrichlorid, Alkylaluminiumdichloride und Dialkylaluminiumchloride. Besonders bevorzugte Lewis-Säuren sind Titantetrachlorid, Bortrichlorid und Bortrifluorid und insbesondere Titantetrachlorid.

Es hat sich bewährt, die Polymerisation in Gegenwart eines Elektronendonors durchzuführen. Als Elektronendonoren kommen aprotische organische Verbindungen in Betracht, die ein an einem Stickstoff, Sauerstoff oder Schwefelatom befindliches, freies Elektronenpaar aufweisen. Bevorzugte Donorverbindungen sind ausgewählt unter Pyridinen wie Pyridin selbst, 2,6-Dimethylpyridin, sowie sterisch gehinderten Pyridinen wie 2,6-Diisopropylpyridin und 2,6-Di-tert-butylpyridin; Amiden, insbesondere N,N-Dialkylamiden von aliphatischen oder aromatischen Carbonsäuren wie N,N-Dimethylacetamid; Lactamen, insbesondere N-Alkyllactamen wie N-Methylpyrrolidon; Ethern, z.B. Dialkylethern wie Diethylether und Diisopropylether, cyclischen Ethern, wie Tetrahydrofuran; Aminen, insbesondere Trialkylaminen wie Triethylamin; Estern, insbesondere $C_1$-$C_4$-Alkylestern aliphatischer $C_1$-$C_6$-Carbonsäuren wie Ethylacetat; Thioethern, insbesondere Dialkylthioethern oder Alkylarylthioethern, wie Methylphenylsulfid; Sulfoxiden, insbesondere Dialkylsulfoxiden, wie Dimethylsulfoxid; Nitrilen, insbesondere Alkylnitrilen wie Acetonitril und Propionitril; Phosphinen, insbesondere Trialkylphosphinen oder Triarylphosphinen, wie Trimethylphosphin, Triethylphosphin, Tri-n-butylphosphin und Triphenylphosphin und nicht polymerisierbaren, aprotischen siliziumorganischen Verbindungen, die wenigstens einen über Sauerstoff gebundenen organischen Rest aufweisen.

Unter den vorgenannten Donoren sind Pyridin und sterisch gehinderte Pyridin-Derivate sowie insbesondere siliziumorganische Verbindungen bevorzugt.

Bevorzugte derartige siliziumorganische Verbindungen sind solche der allgemeinen Formel VI:

$$R^a_rSi(OR^b)_{4-r} \qquad (VI)$$

worin r für 1, 2 oder 3 steht,

$R^a$ gleich oder verschieden sein können und unabhängig voneinander $C_1$-$C_{20}$-Alkyl, $C_3$-$C_7$-Cycloalkyl, Aryl oder Aryl-$C_1$-$C_4$-alkyl bedeuten, wobei die drei letztgenannten Reste auch eine oder mehrere $C_1$-$C_{10}$-Alkylgruppen als Substituenten aufweisen können, und

$R^b$ gleich oder verschieden sind und $C_1$-$C_{20}$-Alkyl bedeuten oder für den Fall, dass r für 1 oder 2 steht, zwei Reste $R^b$ gemeinsam für Alkylen stehen können.

In der Formel VI steht r vorzugsweise für 1 oder 2. $R^a$ bedeutet vorzugsweise eine $C_1$-$C_8$-Alkylgruppe, und insbesondere eine verzweigte oder über ein sekundäres C-Atom gebundene Alkylgruppe, wie Isopropyl, Isobutyl, sec-Butyl, oder eine 5-, 6- oder 7-gliedrige Cycloalkylgruppe, oder eine Arylgruppe, insbesondere Phenyl. Die Variable $R^b$ steht vorzugsweise für eine $C_1$-$C_4$-Alkylgruppe oder für einen Phenyl-, Tolyl- oder Benzylrest.

Beispiele für derartige bevorzugte Verbindungen sind Dimethoxydiisopropylsilan, Dimethoxyisobutylisopropylsilan, Dimethoxydi-isobutylsilan, Dimethoxydicyclopentylsilan, Dimethoxyisobutyl-2-butylsilan, Diethoxyisobutylisopropylsilan, Triethoxytoluylsilan, Triethoxybenzylsilan und Triethoxyphenylsilan.

Im Rahmen der vorliegenden Erfindung steht $C_1$-$C_4$-Alkyl für einen verzweigten oder linearen Alkylrest, wie für

Methyl, Ethyl, Propyl, Isopropyl, n-Butyl, sec-Butyl, Isobutyl oder tert-Butyl. $C_1$-$C_8$-Alkyl steht darüber hinaus für Pentyl, Hexyl, Heptyl, Octyl und deren Stellungsisomere. $C_1$-$C_{20}$-Alkyl steht darüber hinaus für Nonyl, Decyl, Undecyl, Dodecyl, Tridecyl, Tetradecyl, Pentadecyl, Hexadecyl, Heptadecyl, Octadecyl, Nonadecyl, Eicosyl und deren Stellungsisomere. $C_3$-$C_7$-Cycloalkyl steht beispielsweise für Cyclopropyl, Cyclopentyl, Cyclohexyl, Cycloheptyl und Cyclooctyl.
Aryl steht insbesondere für Phenyl, Naphthyl oder Tolyl.
Aryl-$C_1$-$C_4$-alkyl steht insbesondere für Benzyl oder 2-Phenylethyl.
Alkylen steht beispielsweise für $C_2$-$C_5$-Alkylen, wie 1,2-Ethylen, 1,2- und 1,3-Propylen, 1,4-Butylen und 1,5-Pentylen.

Die Lewis-Säure wird in einer Menge eingesetzt, die zur Bildung des Initiatorkomplexes ausreicht. Das Molverhältnis von Lewis-Säure zu Initiator-Verbindung I beträgt im Allgemeinen 10:1 bis 1:10, insbesondere 1:1 bis 1:4 und speziell 1:1 bis 1:2,5.

Die Lewis-Säure und der Elektronendonor werden vorzugsweise in einem Molverhältnis von 20:1 bis 1:20, besonders bevorzugt von 5:1 bis 1:5 und insbesondere von 2:1 bis 1:2 eingesetzt.

Die Konzentration an Lewis-Säure in der Reaktionsmischung liegt üblicherweise im Bereich von 0,1 bis 200 g/l und insbesondere im Bereich von 1 bis 50 g/l.

Als Isobuten-Einsatzstoffe für das erfindungsgemäße Verfahren eignen sich sowohl Isobuten selbst als auch isobutenhaltige $C_4$-Kohlenwasserstoffströme, beispielsweise $C_4$-Raffinate, $C_4$-Schnitte aus der Isobuten-Dehydrierung, $C_4$-Schnitte aus Steamcrackern, FCC-Crackern (FCC: Fluid Catalyzed Cracking), sofern sie weitgehend von darin enthaltenem 1,3-Butadien befreit sind. Erfindungsgemäß geeignete $C_4$-Kohlenwasserstoffströme enthalten in der Regel weniger als 500 ppm, vorzugsweise weniger als 200 ppm Butadien. Bei Einsatz von $C_4$-Schnitten als Einsatzmaterial übernehmen die von Isobuten verschiedenen Kohlenwasserstoffe die Rolle eines inerten Lösungsmittels.

Es können auch Monomermischungen des Isobutens mit olefinisch ungesättigten Monomeren, welche mit Isobuten unter kationischen Polymerisationsbedingungen copolymerisierbar sind, umgesetzt werden. Das erfindungsgemäße Verfahren ist außerdem zur Blockcopolymerisation von Isobuten mit unter kationischen Polymerisationsbedingungen polymerisierbaren ethylenisch ungesättigten Comonomeren geeignet. Sofern Monomermischungen des Isobutens mit geeigneten Comonomeren copolymerisiert werden sollen, enthält die Monomermischung vorzugsweise mehr als 80 Gew.-%, insbesondere mehr als 90 Gew.-%, und, besonders bevorzugt, mehr als 95 Gew.-% Isobuten, und weniger als 20 Gew.-%, vorzugsweise weniger als 10 Gew.-%, und insbesondere weniger als 5 Gew.-%, Comonomere.

Als copolymerisierbare Monomere kommen Vinylaromaten wie Styrol und $\alpha$-Methylstyrol, $C_1$-$C_4$-Alkylstyrole wie 2-, 3- und 4-Methylstyrol, sowie 4-tert-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2.

Die Polymerisation wird üblicherweise in einem Lösungsmittel durchgeführt. Als Lösungsmittel kommen alle niedermolekularen, organischen Verbindungen oder deren Gemische in Betracht, die eine geeignete Dielektrizitätskonstante und keine abstrahierbaren Protonen aufweisen und die unter den Polymerisationsbedingungen flüssig sind. Bevorzugte Lösungsmittel sind Kohlenwasserstoffe, z.B. acyclische Kohlenwasserstoffe mit 2 bis 8 und vorzugsweise 3 bis 8 Kohlenstoffatomen wie Ethan, Iso- und n-Propan, n-Butan und seine Isomeren, n-Pentan und seine Isomeren, n-Hexan und seine Isomeren, n-Heptan und seine Isomeren, sowie n-Octan und seine Isomeren, cyclische Alkane mit 5 bis 8 Kohlenstoffatomen wie Cyclopentan, Methylcyclopentan, Cyclohexan, Methylcyclohexan, Cycloheptan, acyclische Alkene mit vorzugsweise 2 bis 8 Kohlenstoffatomen wie Ethen, Iso- und n-Propen, n-Buten, n-Penten, n-Hexen und n-Hepten, cyclische Olefine wie Cyclopenten, Cyclohexen und Cyclohepten, aromatische Kohlenwasserstoffe wie Toluol, Xylol, Ethylbenzol, sowie halogenierte Kohlenwasserstoffe, wie halogenierte aliphatische Kohlenwasserstoffe, z.B. wie Chlormethan, Dichlormethan, Trichlormethan, Chlorethan, 1,2-Dichlorethan und 1,1,1-Trichlorethan und 1-Chlorbutan, sowie halogenierte aromatische Kohlenwasserstoffe wie Chlorbenzol und Fluorbenzol. Die als Lösungsmittel verwendeten halogenierten Kohlenwasserstoffe umfassen keine Verbindungen, worin Halogenatome an sekundären oder tertiären Kohlenstoffatomen sitzen.

Bevorzugte Lösungsmittel sind aromatische Kohlenwasserstoffe, wovon Toluol besonders bevorzugt ist. Ebenfalls bevorzugt sind Lösungsmittelgemische, die wenigstens einen halogenierten Kohlenwasserstoff und wenigstens einen aliphatischen oder aromatischen Kohlenwasserstoff umfassen. Insbesondere umfasst das Lösungsmittelgemisch Hexan und Chlormethan und/oder Dichlormethan. Das Volumenverhältnis von Kohlenwasserstoff zu halogeniertem Kohlenwasserstoff liegt dabei vorzugsweise im Bereich von 1:10 bis 10:1, besonders bevorzugt im Bereich von 4:1 bis 1:4 und insbesondere im Bereich von 2:1 bis 1:2.
Bevorzugt sind auch chlorierte Kohlenwasserstoffe, deren Polarität es erlaubt, in einem einheitlichen Lösungsmittel zu polymerisieren. Beispiele sind die Propyl-, Butyl- und Pentylchloride wie 1-Chlorbutan und 2-Chlorpropan.

In der Regel wird man das erfindungsgemäße Verfahren bei Temperaturen unterhalb 0°C, z.B. im Bereich von 0 bis -140°C, vorzugsweise im Bereich von -30 bis -120°C, und besonders bevorzugt im Bereich von -40 bis -110°C durchführen, also bei ca.-45°C, ca. -50°C oder im Bereich -30°C - -80°C. Ein Bereich von 0 bis -30°C kann über normale

Ammoniakkühlung erreicht werden und ist deswegen besonders einfach zu erreichen und besonders bevorzugt. Der Reaktionsdruck ist von untergeordneter Bedeutung.

Die Abführung der Reaktionswärme erfolgt in üblicher Weise, beispielsweise durch Wandkühlung und/oder unter Ausnutzung einer Siedekühlung.

Als Lewissäure kommen die für die Polymerisation vorgängig beschriebenen Lewissäuren in Betracht, wobei Formen wie $BF_3$, $BCl_3$, $SnCl_4$, $TiCl_4$, $AlCl_3$ industriell einfach zugänglich und damit vorteilhaft sind. Mit Al-haltigen Lewissäuren erhält man hohe Umsätze, wobei $AlCl_3$ besonders bevorzug ist.

Als Brönstedsäure kommen starke organischen Säuren oder Supersäuren in Betracht, z.B. Trifluoromethansulfonsäure, Methansulfonsäure, Trifluoressigsäure, Trichloressigsäure.

Das Gemisch kann auch in einem Lösungsmittel eingesetzt werden. Für dessen Auswahl gelten die für das Lösungsmittel in der Polymerisation gemachten Überlegungen. Man gelangt zu bevorzugten, besonders einfachen Verfahren, wenn man für die Polymerisation und das Abbruchgemisch das gleiche Lösungsmittel verwendet.

Nach der Terminierung wird in der Regel das Lösungsmittel in geeigneten Aggregaten wie Rotations-, Fallfilm- oder Dünnschichtverdampfern oder durch Entspannung der Reaktionslösung entfernt oder man führt Folgeumsetzungen im gleichen Lösungsmittel durch.

In einer Ausführungsform des erfindungsgemäßen Verfahrens wird die Polymerisation diskontinuierlich, also als Batchreaktion durchführen. Dazu kann man zum Beispiel Isobuten in einem Lösungsmittel vorlegen, Initiator und ggf. weitere Zusätze wie Siloxane zusetzen und die Reaktion mit einer Lewissäure starten. Ebenso ist es möglich, Lösungsmittel, Initiator, Lewissäure und ggf. weitere Zusätze wie Siloxane vorzulegen und die Reaktion durch kontinuierliche Zugabe von Isobuten zu steuern. In allen Fällen wird man die Reaktionstemperatur durch geeignete Kühlmaßnahmen im gewünschten Bereich halten. Eine besondere Herausforderung bei der Polymerisation ist durch eine in einem kurzen Zeitraum anfallende hohe Reaktionswärme gegeben. Eine Teilaufgabe der vorliegenden Erfindung war es daher ein Verfahren zur Verfügung zu stellen, dass es gestattet die schnelle Wärmeabgabe der Reaktion zu kontrollieren. Insbesondere im industriellen Maßstab durchgeführte Polymerisationen stellen bei größeren Umsatzmengen eine Herausforderung bezüglich der anfallenden schnellen Wärmeabgabe dar. Eine Teilaufgabe der Erfindung war es daher ein Verfahren bereitzustellen, dass es gestattet im industriellen Maßstab Reaktionen durchzuführen.

Um in einer lebenden kationischen Polymerisation höhere Molekulargewichte zu erreichen, ist es nötig, eine gute Temperaturkontrolle über die Wärmeabfuhr in kontinuierlichen Polymerisationsverfahren zu erreichen.

Entsprechend bieten sich Reaktoren mit hohen Wärmeübertragerflächen bezogen auf das Reaktionsvolumen an. Dies können neben Rohrreaktoren auch Reaktoren mit Rechteckkanälen, Rührkesselreaktoren oder bestimmte Mikro- oder Milli-Reaktoren sein. Mikro- oder Milli-Reaktoren erlauben eine gute Temperaturkontrolle auch bei stark exothermen Reaktionen. Durch das größere Verhältnis von Oberfläche zu Reaktorvolumen wird beispielsweise eine sehr gute Wärmezufuhr bzw. -abfuhr ermöglicht, weshalb sich auch stark exotherme Reaktionen annähernd isotherm durchführen lassen. Darüber hinaus lassen sich insbesondere Milli-Reaktoren aufgrund ihrer Bauform gut in den industriellen Maßstab hochskalieren.

In einer anderen Ausführungsform des erfindungsgemäßen Verfahrens wird die Polymerisation im kontinuierlichen Verfahren durchgeführt, welches mindestens die folgenden Schritte umfasst:

(I) Kontinuierliches Eindosieren von Isobuten, Lösungsmittel, Initiator, und ggf. weitere Zusätze in einen Mischer und Vermischen der Edukte in der Mischeinheit, sowie
(II) Start der kontinuierlichen Polymerisation durch kontinuierliches Eindosieren einer Lewissäure und Vermischen mit den Edukten bei Reaktionstemperatur, sowie
(III) Kontinuierliche Polymerisation, indem man das erhaltene Reaktionsgemisch durch mindestens eine auf Reaktionsbedingungen temperierte Reaktionszone hindurchleitet.
(IV) Abbruch der Reaktion durch ein Gemisch von mindestens einem Phenol und mindestens einer Lewissäure und/oder mindestens einer Brönstedsäure.

Bei der kontinuierlichen Fahrweise ist es möglich, durch Zudosieren einer weiteren Substanz oder eines Substanzgemisches die Reaktionsbedingungen nach der initialen Katalysatorzugabe anzupassen. So kann man zum Beispiel zunächst den Initiator zum kationischen Komplex umsetzen und dann durch Zugabe von Lösungsmittel und/oder Katalysator und/oder Cokatalysator und/oder Monomer die Bedingungen für die Polymerisation einstellen.

Verwendete Apparaturen:

Die Polymerisation wird bevorzugt unter Verwendung von Milli-Reaktoren durchgeführt. Milli-Reaktoren unterscheiden sich von herkömmlichen Apparaturen durch ihre charakteristische Dimension. Unter der charakteristischen Dimension einer durchströmten Einrichtung, z.B. eines Mischers oder eines Reaktors, versteht man im Rahmen der vorliegenden Erfindung die kleinste, zur Strömungsrichtung senkrechte Ausdehnung. Die charakteristische Dimension

von Milli-Reaktoren ist deutlich kleiner als die herkömmlicher Apparaturen. Sie kann insbesondere im Millimeterbereich liegen. Im Vergleich zu herkömmlichen Reaktoren zeigen daher Milli-Reaktoren in Bezug auf die ablaufenden Wärme- und Stofftransportvorgänge ein signifikant verschiedenes Verhalten. Durch das größere Verhältnis von Oberfläche zu Reaktorvolumen wird beispielsweise eine sehr gute Wärmezu- bzw. -abfuhr ermöglicht, weshalb sich auch stark endo- bzw. exotherme Reaktionen annährend isotherm durchführen lassen. Im Vergleich zu Mikro-Reaktoren, deren charakteristische Dimensionen im Mikrometerbereich liegen, sind Milli-Reaktoren aufgrund der charakteristischen Dimensionen weniger Verstopfungsanfällig und weisen somit eine höhere Robustheit im Hinblick auf eine industrielle Anwendung auf.

Herkömmliche Reaktoren weisen eine charakteristische Dimension von > 30 mm auf, Milli-Reaktoren hingegen ≤ 30 mm. Die charakteristische Dimension eines MilliReaktors ist in der Regel höchstens 30 mm, z.B. 0,1 bis 30 mm oder vorzugsweise 0,3 bis 30 mm oder besonders bevorzugt 0,5 bis 30 mm; vorzugsweise höchstens 20 mm, z.B. 0,1 bis 20 mm oder vorzugsweise 0,3 bis 20 mm oder besonders bevorzugt 0,5 bis 20 mm; besonders bevorzugt höchstens 15 mm, z.B. 0,1 bis 15 mm oder vorzugsweise 0,3 bis 15 mm oder besonders bevorzugt 0,5 bis 15 mm; stärker bevorzugt höchstens 10 mm, z.B. 0,1 bis 10 mm oder vorzugsweise 0,3 bis 10 mm oder besonders bevorzugt 0,5 bis 10 mm; noch stärker bevorzugt höchstens 8 mm, z.B. 0,1 bis 8 mm oder vorzugsweise 0,3 bis 8 mm oder besonders bevorzugt 0,5 bis 8 mm; insbesondere höchstens 6 mm, z.B. 0,1 bis 6 mm oder vorzugsweise 0,3 bis 6 mm oder besonders bevorzugt 0,5 bis 6 mm; und speziell höchstens 4 mm, z.B. 0,1 bis 4 mm oder vorzugsweise 0,3 bis 4 mm oder besonders bevorzugt 0,5 bis 4 mm.

Erfindungsgemäß einzusetzende Milli-Reaktoren sind vorzugsweise ausgewählt unter temperierbaren Rohrreaktoren, Rohrbündelwärmetauschern, Plattenwärmetauschern und temperierbaren Rohrreaktoren mit Einbauten. Erfindungsgemäß einzusetzende Rohrreaktoren, Rohrbündelwärmetauscher und Plattenwärmetauscher weisen als charakteristische Dimensionen Rohr- bzw. Kapillardurchmesser im Bereich von vorzugsweise 0,1 mm bis 25 mm, besonders bevorzugt im Bereich von 0,5 mm bis 6 mm, stärker bevorzugt im Bereich von 0,7 bis 5 mm und insbesondere im Bereich von 0,8 mm bis 4 mm, und Schichthöhen bzw. Kanalbreiten im Bereich von vorzugsweise 0,2 mm bis 10 mm, besonders bevorzugt im Bereich von 0,2 mm bis 6 mm und insbesondere im Bereich von 0,2 mm bis 4 mm auf. Erfindungsgemäß einzusetzende Rohrreaktoren mit Einbauten weisen Rohrdurchmesser im Bereich von 5 mm bis 500 mm, bevorzugt im Bereich von 8 mm bis 200 mm und besonders bevorzugt im Bereich von 10 mm bis 100 mm auf. Alternativ können auch Plattenapparaten vergleichbare Flachkanäle mit eingelegten Mischstrukturen erfindungsgemäß zum Einsatz kommen. Sie weisen Höhen im Bereich von 1 mm bis 20 mm und Breiten im Bereich von 10 mm bis 1000 mm und insbesondere im Bereich von 10 mm bis 500 mm auf. Optional können die Rohrreaktoren Mischelemente enthalten, welche von Temperierkanälen durchzogen sind.

Die optimale charakteristische Dimension ergibt sich hierbei aus den Anforderungen an die zulässige Anisothermie der Reaktionsführung, den maximal zulässigen Druckverlust und die Verstopfungsanfälligkeit des Reaktors.

Besonders bevorzugte Milli-Reaktoren sind:

- Rohrreaktoren aus Kapillaren, Kapillarbündeln mit Rohrquerschnitten von 0,1 bis 25 mm, bevorzugt von 0,5 bis 6 mm, besonders bevorzugt von 0,7 bis 4 mm, mit oder ohne zusätzliche mischende Einbauten, wobei die Rohre bzw. Kapillaren von einem Temperiermedium umspült werden können;

- Rohrreaktoren, bei dem der Wärmeträger in den Kapillaren/Rohren geführt wird, und das zu temperierende Produkt um die Rohre geführt und durch Einbauten (Mischelemente) homogenisiert wird;

- Plattenreaktoren, die wie Plattenwärmetauscher mit isolierten parallelen Kanälen, Netzwerken von Kanälen oder Flächen, welche mit oder ohne strömungsbrechenden Einbauten (Pfosten) ausgerüstet sind, aufgebaut sind, wobei die Platten Produkt und Wärmeträger parallel oder in einer Schichtstruktur, welche abwechselnd Wärmeträger- und Produkt-Lagen aufweist, führen, so dass während der Reaktion die chemische und thermische Homogenität sichergestellt werden kann; sowie

- Reaktoren mit "flachen" Kanalstrukturen, welche nur in der Höhe eine "Millidimension" aufweisen und nahezu beliebig breit sein können, deren typische kammförmige Einbauten die Ausbildung eines Strömungsprofils verhindern und zu einer für die definierte Reaktionsführung und Verweilzeit wichtigen, engen Verweilzeitverteilung führen.

In einer bevorzugten Ausführung der Erfindung wird mindestens ein Reaktor eingesetzt, der weitgehend die Verweilzeitcharakteristik einer Pfropfenströmung aufweist. Liegt in einem Rohrreaktor eine Pfropfenströmung ("plug-flow") vor, so kann der Zustand des Reaktionsgemisches (z.B. Temperatur, Zusammensetzung etc.) in Strömungsrichtung variieren, für jeden einzelnen Querschnitt senkrecht zur Fließrichtung hingegen ist der Zustand des Reaktionsgemisches gleich. Damit haben alle in das Rohr eintretenden Volumenelemente die gleiche Verweilzeit im Reaktor. Bildlich gesehen durchströmt die Flüssigkeit das Rohr, als handele es sich um eine Anreihung leicht durch das Rohr gleitender Pfropfen. Zusätzlich kann die Quervermischung durch den intensivierten Stofftransport senkrecht zur Strömungsrichtung

den Konzentrationsgradienten senkrecht zur Strömungsrichtung ausgleichen.

Trotz der meist laminaren Durchströmung von Apparaturen mit Mikrostrukturen lässt sich also Rückvermischung vermeiden und eine enge Verweilzeitverteilung ähnlich wie bei einem idealen Strömungsrohr erreichen.

Die Bodensteinzahl ist eine dimensionslose Kennzahl und beschreibt das Verhältnis des Konvektionsstromes zum Dispersionsstrom (z.B. M. Baerns, H. Hofmann, A. Renken, Chemische Reaktionstechnik, Lehrbuch der Technischen Chemie, Band 1, 2. Auflage, S. 332 ff). Sie charakterisiert also die Rückvermischung innerhalb eines Systems.

$$Bo = \frac{uL}{D_{ax}}$$

wobei u für die Strömungsgeschwindigkeit [$ms^{-1}$], L für die Länge des Reaktors [m] und $D_{ax}$ für den axialen Dispersionskoeffizienten [$m^2h^{-1}$] stehen.

Eine Bodensteinzahl von Null entspricht der vollständigen Rückvermischung in einem idealen kontinuierlichen Rührkessel. Eine unendlich große Bodensteinzahl hingegen bedeutet absolut keine Rückvermischung, wie bei der kontinuierlichen Durchströmung eines idealen Strömungsrohres.

In Kapillarreaktoren kann das gewünschte Rückvermischungsverhalten durch Einstellung des Verhältnisses von Länge zu Durchmesser in Abhängigkeit von den Stoffparametern und dem Strömungszustand eingestellt werden. Die zu Grunde liegenden Berechnungsvorschriften sind dem Fachmann bekannt (z.B. M. Baerns, H. Hofmann, A. Renken: Chemische Reaktionstechnik, Lehrbuch der Technischen Chemie, Band 1, 2. Auflage, S. 339 ff). Soll ein möglichst rückvermischungsarmes Verhalten realisiert werden, so wird die oben definierte Bodensteinzahl bevorzugt größer 10, besonders bevorzugt größer 20 und insbesondere größer 50 gewählt. Für eine Bodensteinzahl von größer 100 besitzt der Kapillarreaktor dann weitgehend einen Propfenströmungscharakter.

Als Materialien für die erfindungsgemäß einzusetzenden Mischer und Reaktoren haben sich im Bereich niedriger Temperaturen austenitische Edelstähle, wie 1.4541 bzw. 1.4571, allgemein als V4A bzw. als V2A bekannt, sowie Edelstähle der US-Typen SS316 und SS317Ti, als vorteilhaft erwiesen. Bei höheren Temperaturen und unter korrosiven Bedingungen sind Polyetherketone ebenfalls geeignet. Es können aber auch korrosionsresistentere Hastelloy®-Typen, Glas oder Keramik als Materialien und/oder entsprechende Beschichtungen, wie beispielsweise TiN3, Ni-PTFE, Ni-PFA oder dergleichen, für die erfindungsgemäß einzusetzenden Reaktoren verwendet werden.

Die Reaktoren sind so konstruiert, dass die Wärmeübertragerflächen in sehr gutem Kontakt mit einem Temperiermedium sind, so dass ein sehr guter Wärmeübergang zwischen der Reaktionsmischung in der Reaktionszone sowie dem Temperiermedium möglich ist, so dass eine weitgehend isotherme Reaktionsführung möglich ist.

Das Temperiermedium sollte eine ausreichend hohe Wärmekapazität aufweisen, intensiv umgewälzt werden und mit einer Thermostatisiereinheit ausreichender Leistung versehen sein, und der der Wärmeübergang zwischen der Reaktionszone und dem Temperiermedium sollte möglichst gut sein, um eine möglichst homogene Temperaturverteilung in der Reaktionszone zu gewährleisten.

Hierzu sollte -je nach Exothermie und charakteristischer Reaktionszeit der Polymerisationsreaktion- das Verhältnis von Wärmeaustauschfläche zu Reaktionsvolumen in der Regel zwischen ca. 50 und ca. 5000 $m^2/m^3$, bevorzugt zwischen ca.100 und ca. 3000 $m^2/m^3$, besonders bevorzugt zwischen ca. 150 und ca. 2000 $m^2/m^3$ und insbesondere zwischen ca. 200 und ca. 1300 $m^2/m^3$ gewählt werden. Typischerweise liegen die Werte für Reaktoren mit Produktionskapazitäten von ca. 5000 Tonnen pro Jahr im Bereich von ca. 200 $m^2/m^3$, für Reaktoren mit Produktionskapazitäten von ca. 500 Tonnen pro Jahr im Bereich von ca. 500 $m^2/m^3$ und für Reaktoren im Labormaßstab bei ca. 600 bis 1300 $m^2/m^3$. Weiterhin sollte der Wärmeübergangskoeffizient auf der Seite des Reaktionsmediums in der Regel mehr als 50 $W/m^2K$, bevorzugt mehr als 100 $W/m^2K$, besonders bevorzugt mehr als 200 $W/m^2K$ und insbesondere mehr als 400 $W/m^2K$ betragen.

Insbesondere ist das erfindungsgemäße Verfahren geeignet, in kontinuierlicher und/oder diskontinuierlicher Fahrweise technisch Polyisobutenderivate herzustellen. In diskontinuierlicher Fahrweise bedeutet dies Batchgrößen über 10 kg, besser >100 kg, noch optimaler > 1000 kg oder > 5000 kg. In kontinuierlicher Fahrweise bedeutet dies Produktionsmengen über 100 kg/Tag, besser > 1000 kg/Tag, noch optimaler > 10 t/Tag oder > 100 t/Tag.

Die nach dem erfindungsgemäßen Verfahren hergestellten Isobuten-Polymere weisen eine enge Molekulargewichtsverteilung auf. Der Polydispersitätsindex PDI = $M_w/M_n$ liegt dabei meist unter 2,0, vorzugsweise unterhalb von 1,60, besonders bevorzugt unterhalb von 1,40 und insbesondere unterhalb von 1,3. Insbesondere weisen die erfindungsgemäß hergestellten Polymere wenig hochmolekulare Nebenprodukte auf, was auch an einem kleinen Verhältnis von $M_z/M_n$ sichtbar wird, welches meist unter 2,0, vorzugsweise unterhalb von 1,60, besonders bevorzugt unterhalb von 1,40 und insbesondere unterhalb von 1,20 liegt. Messmethode für Molekulargewichte: siehe Beispiele).

Vorzugsweise wird das erfindungsgemäße Verfahren zur Herstellung von Polyisobutenen mit einem zahlenmittleren Molekulargewicht $M_n$ von 200 bis 100000, besonders bevorzugt von 800 bis 50000 und insbesondere von

1500 bis 15000 eingesetzt.

Das Verfahren ist besonders für hochmolekulare Polyisobutene geeignet, also Polyisobutene, die ein zahlengemitteltes Molekulargewicht Mn größer 800, besser größer 3500, noch besser größer 5000 oder größer 7000 und bevorzugt größer 12000 haben.

Dabei ist die Funktionalität (bezogen auf die optional derivatisierten, endständigen Phenolgruppen) vorzugsweise mindestens 80%, besonders bevorzugt mindestens 90% und insbesondere bevorzugt mindestens 95%.

Ein weiterer Aspekt der vorliegenden Erfindung ist ein Polyisobuten, das an wenigstens einem Molekülende durch eine Gruppe der Formel V terminiert ist,

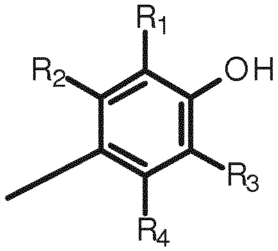

(V)

worin $R_1$,$R_2$,$R_3$,$R_4$ wie vorstehend definiert sind,
oder ein Produkt davon, das durch Veresterung, insbesondere

i) Acrylierung
Veretherung, insbesondere
ii) Allylierung oder
iii) Umsetzung mit Epichlorhydrin,
iv) Reduktion zum Cyclohexanolsystem mit den Endgruppen VI

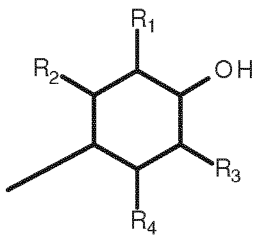

VI

worin $R_1$,$R_2$,$R_3$,$R_4$ wie vorstehend definiert sind,

erhältlich ist.

Um die mit einem Phenol-Derivate terminierten Polyisobutene weiter zu modifizieren, wird die OH-Gruppe des Phenols aktiviert. Geeignete Aktivierungsreagenzien sind starke Basen, die die OH-Funktion in das Phenolat überführen. Geeignete Reagenzien sind z.B. Natriumhydrid, Lithiumhydrid, Kaliumhydrid, n-Butyllithium, sek.-Butyllithium, iso-Butyllithium, Tert.-Butyllithium, Hexyllithium, Methyllithium, Natriumethoxylat, Natriumbutoxylat, Natriumamid, Lithiumdiisopropylamid, oder elementares Natrium oder Kalium. Diese Basen werden als Feststoff ohne Lösemittel oder als Lösung, oder Suspension mit Lösemittel verwendet. Geeignete Lösemitteln sind z.B. Tetrahydrofuran, Benzol, Diethylether, Paraffinöl.

Weitere geeignete starke Basen sind z.B. Natriumhydroxid, Kaliumhydroxid, Calciumhydroxid, Natriumcarbonat. Diese Basen werden als Feststoff oder als wässrige Lösung verwendet. Zusätzlich mit dem wässrigen System werden Phasentransferkatalysatoren verwendet. Geeignete Katalysatoren sind ausgewählt aus der Gruppe von Kationen bestehend aus z.B. Tetrabutylammonium, Trimethyldodecylammonium, Methytrioctylammonium, Heptyltributylammonium, Tetrapropylammonium, Tetrahexylammonium, Tetraoctylammonium, Tetradecylammonium, Tetradodecylammonum, Tetrabutylphosphonium, Dodecyltrimethylphophonium und ausgewählt aus der Gruppe von Anionen bestehend aus Chlorid, Bromid, Sulfate, Hydrogensulfate, Phosphate, Hydrogenphosphate.

i) Acrylierung

Unter Acrylierung wird die Veresterung mit (Meth)acrylsäure verstanden. Zur Funktionalisierung mit

(Meth)acrylat kann ein gemäß dem erfindungsgemäßen Verfahren hergestelltes Polyisobuten mit OH Terminierung oder in aktivierter Form mit einem (Meth)acrylat-Derivat umgesetzt werden. Geeignete (Meth)acrylate sind zum Beispiel Acryloylchlorid, Acryloylbromid, Acrylsäure, Methacryloylchlorid, Methacryloylbromid, Methacrylsäure. Die Reaktion findet im Bereich von -40°C bis 140°C statt, vorzugsweise im Bereich -5°C bis 120°C statt.

Die Acrylierung wird vorzugsweise durch Umesterung durchgeführt. Mit Phenol terminiertes Polyisobuten wird mit einem (Meth)acrylatester in Reaktion gebracht. Geeignete (Meth)acrylatester sind z.B. Methylacrylat, Ethylacrylat, Propylacrylat, Butylacrylat, Phenylacrylat, Methylmethacrylat, Ethylmethacrylat, Propylmethacrylat, Butylmethacrylat, Phenylmethacrylat. Das in der Umesterung entstehende Wasser wird kontinuierlich abgetrennt. Die Trennung erfolgt mit einer normalen Destillation oder das Wasser wird mit Hilfe eines anderen Lösemittels, wie z.B. Toluol, ausgetragen.

ii) Allylierung

Zur Funktionalisierung mit Allylgruppen kann ein gemäß dem erfindungsgemäßen Verfahren hergestelltes Polyisobuten mit OH Terminierung oder in aktivierter Form mit einem funktionalisierten Allyl-Derivat umgesetzt werden. Geeignete Derivate sind z.B. Allylchlorid, Allylbromid, Allyliodid, Methallylchlorid, 4-Chlormethylstyrol, Chloropren.

In einer weiteren Variante wird das mit Allyl-Gruppe funktionalisierte Polyisobuten weiter oxidiert und eine Epoxy-Gruppe eingebaut. Die Oxidation wird normalerweise mit Peroxid durchgeführt. Geeignete Peroxide sind z.B. Wasserstoffperoxid, p-Chlorbenzoeperoxid. Die Oxidation wird im Temperaturbereich von 0 bis 150°C durchgeführt abhängig von dem verwendeten Peroxid. Geeignete Lösemittel sind hydrophobe Alkane, aromatische Verbindungen, Öle, oder halogenidhaltige Lösemitteln, wie z.B. Hexan, Heptan, Paraffinöl, Toluol, Butylchlorid, oder deren Mischungen. Die Oxidation wird ohne oder in der Anwesenheit von weiteren Additiven, Katalysatoren durchgeführt, wie z.B. Ameisensäure, Natriumhydrogencarbonat, oder Eisensulfat.

iii) Umsetzung mit Epichlorhydrin

In einer weiteren Variante kann ein Epoxid-funktionalisiertes Polyisobuten aus einem gemäß dem erfindungsgemäßen Verfahren hergestellten, vorzugsweise aktivierten Polyisobuten direkt mit Epichlorhydrin hergestellt werden.

Die Reaktionstemperatur in der Reaktion liegt in einem Bereich von 0°C bis 150°C.

Normalerweise wendet man bei den Umsetzungen i - iii Normaldruck an, in speziellen Ausführungsformen ist ein Vakuum zwischen 1 mbar absolut bis Normaldruck, zum Beispiel ca. 5, ca. 50 oder ca. 500 mbar absolut vorteilhaft. In einer weiteren Ausführungsform läuft die Reaktion bei erhöhten Drucken wie zum Beispiel im Bereich von etwa 1,5 bis etwa 20 bar ab.

Diese Reaktionen können auch in Anwesenheit einer Hilfsbase, welche die freigesetzte Halogenwasserstoffsäure bindet, stattfinden. Beispiele sind tertiäre Basen wie Triethylamin oder DABCO, basische Aromaten wie Pyridin oder anorganische Basen.

iv) Reduktion zum Cyclohexanolsystem,

Die Reduktion von Phenol-terminierten Polyisobutenen ist in der WO06119931 A1 beschrieben, worauf vollinhaltlich Bezug genommen wird.

Des Weiteren seien genannt auch Funktionalisierungsprodukte der erfindungsgemäßen Polyisobutyl-substituierten Cyclohexanole der Formel (VI), erhältlich durch Umsetzung der Polyisobutyl-substituierten Cyclohexanole (VI)

a) mit einer olefinisch ungesättigten Mono- oder Dicarbonsäure oder einem Derivat davon und optional anschließender Polymerisation des gebildeten olefinisch ungesättigten Produkts; oder Umsetzung mit dem Polymerisat einer olefinisch ungesättigten Mono- oder Dicarbonsäure oder einem Derivat davon; oder

(b) mit einem Allylhalogenid und optional anschließender Polymerisation des gebildeten Allylethers; oder

(c) mit einem Alkylenoxid; oder

(d) mit einem Isocyanat, einem Diisocyanat oder einem Triisocyanat; oder

(e) mit einem Kohlensäurederivat oder mit gesättigten oder aromatischen Dicarbonsäuren und Derivaten davon; oder

(f) mit Ammoniak oder einem Amin NR'R", wobei R' für einen $C_1$-$C_{24}$-Alkylrest und R" für einen $C_1$-$C_{24}$-Alkylrest oder H steht.

Bezüglich der Ausführung dieser Reaktionen wird auf die WO06119931 A1 verwiesen.

Des Weiteren betrifft die Erfindung auch ein wie oben beschriebenes Verfahren zur Herstellung von funktionalisierten Polyisobutenen, wobei eine oder mehrere der terminalen Phenolgruppen derivatisiert sind durch Ethoxylierung. Die Erfindung betrifft durch dieses Verfahren erhältliche Polyisobuten-Polyethylenoxid-Blockcopolymere.

Erfindungsgemäß hergestellte Phenol-terminierte Polyisobuten lassen sich ethoxylieren und es lassen sich

aus einem gemäß dem erfindungsgemäßen Verfahren hergestellte, durch eine Phenol-Gruppe aktivierte Polyisobutylene zu Polyisobuten-Polyethylenoxid-Blockcopolymere herstellen.

Beispielsweise wird das Phenol-terminierte Polyisobuten mit wässriger, basischer Lösung (z.B. Alkalihydroxidlösung, KOH-Lösung) aktiviert und die Mischung bei erhöhter Temperatur z.B. bei mindestens 100°C unter Vakuum entwässert. Die Ethoxylierung findet bei Erwärmen (z.B. auf 100-150°C) und unter Druck (z.B. mindestens 1 bar) bei vorzugsweise kontinuierlicher Dosierung von Ethylenoxid statt. Das basische Rohprodukt wird mit geeigneten Säuren (z.B. Essigsäure) oder mit Silikaten neutralisiert und abfiltriert. Alternativ kann die Ethoxylierung statt mit basischer Lösung (KOH-Lösung) mit der Hilfe von Doppelmetallcyanid (DMC)-Katalysator unter den ansonsten gleichen Bedingungen durchgeführt werden.

Die gewünschte Länge des Polyethylen-Blocks in den Block-Copolymeren wird aus dem Verhältnis von Phenol-terminiertem Polyisobuten und Ethylenoxid berechnet.

Die Länge des Polyethylen-Blocks (der Ethoxylierungsgrad) kann z.B. 1 bis 300, vorzugsweise von 3 bis 200 betragen.

Die folgenden Beispiele sollen die Erfindung näher veranschaulichen.

Beispiele

Beispiel 1: Polymerisation von Iso-Buten und in situ Terminierung mit Phenol

500 ml Chlorbutan und 150 ml (1,59 Mol) iso-Buten wurden mit Butyllithium wasserfrei titriert und unter Stickstoff in einen 1-L-Reaktionskolben ausgerüstet mit einem Tropftrichter destilliert. 15g (100 mMol) C 8-Chlorid wurde zugeben und die Mischung auf -78°C abgekühlt. Die Polymerisation wurde mit der Zugabe von 3 ml Titantetrachlorid gestartet. Die Temperatur ist sofort auf -27°C gestiegen, Die Polymer-Mischung wurde noch 60 Minuten bei -78°C gerührt. 46,5 g (0,495 Mol) Phenol wurde in 150 ml Chlorbutan gelöst und 4 g (30 mMol) Aluminiumtrichlorid hinzugefügt. Nach 10 Minuten wurde eine leicht gelbliche klare Lösung erhalten. Die Phenol-Lösung wurde in 10 Minuten zur Lösung von Polyisobuten bei 2°C getropft und die Mischung auf RT erwärmt und mit 1 L Hexan verdünnt. Die Lösung wird mit Methanol/Wasser (80/20) Mischung 3-mal gewaschen und die Hexanphase über Natriumsulfat getrocknet, filtriert, und bei 120°C/10 mbar einrotiert. Auswaage: 104 g Phenol-funktionalisiertes Polyisobuten. GPC-Analyse (Polystyrol Standard, Ergebnis auf Polyisobuten umgerechnet, ERC-RI-101 Detektor, Tetrahydrofuran Eluent, Flussrate: 1200ml/min): Mn= 10530 g/mol, Mw=13200 g/mol, Mz=16600 g/mol, PDI=1,29 $^1$H-FT-NMR (500 MHz, 16 Scans, $CD_2Cl_2$) von den Allyl-Gruppen in Polyisobuten Aromatische Starter in Polymer: 7,38ppm, 1H, s; 7,15 ppm, 3H, mp; Phenol-funktionalisierung: 7,22ppm, 2H, d; 6,74ppm, 2H, d.

Beispiel 2: Kontinuierliche Polymerisation von Iso-Buten und in-situ Terminierung mit Phenol im Milli-Reaktor

Flüssiges Isobuten (3,57 mol/h) wurde kontinuierlich mit einer Lösung aus C8-Chlorid (2,63 mol/h), Phenyltriethoxysilan (10 mmol/h) und 1,3-Dicumylchlorid (18 mmol/h) in einem Mikromischer gemischt und nachfolgend gleichmäßig mit einer Lösung aus C8-Chlorid (2,62 mol/h) und $TiCl_4$ (39 mmol/h) in einem zweiten Mikromischer bei Reaktionstemperatur gemischt. Die entstandene Reaktionslösung wurde anschließend durch eine temperierte Reaktionskapillare aus Hastelloy (Innendurchmesser 4 mm, Länge 27 m) mit einer definierten gleich bleibenden Flussrate von 700 g/h gepumpt. In einem dritten Mikromischer wurde die entstandene Polymerlösung bei Umgebungstemperatur mit einer Mischung aus Phenol (0,5 mol/h), C8-Chlorid (4,32 mol/h) und Aluminium-trichlorid (50,2 mmol/h) kontinuierlich gemischt und einem 2 l Reaktionskolben für 30 min zugeführt. Nach 2 Stunden Rühren unter Raumtemperatur wurde die Reaktion unter Zugabe von Methanol abgebrochen und das Produkt analog der Versuche im Batch (Beispiel 1) aufgearbeitet und analysiert.

GPC-Analyse (Polystyrol Standard, Ergebnis auf Polyisobuten umgerechnet, ERC-RI-101 Detektor, Tetrahydrofuran Eluent, Flussrate: 1200ml/min): Mn= 9970 g/mol, Mw=12500 g/mol, Mz=15700 g/mol, PDI=1,25

$^1$H-FT-NMR (500 MHz, 16 Scans, $CD_2Cl_2$) von den Allyl-Gruppen in Polyisobuten Aromatische Starter in Polymer: 7,38ppm, 1 H, s; 7,15 ppm, 3H, mp; Phenolfunktionalisierung: 7,22ppm, 2H, d; 6,74ppm, 2H, d.

Beispiel 3: Umsetzung von PIB10000-Bisphenol mit Allylbromid

50g PIB10000-Bisphenol (Phenol terminiertes PIB mit Mn von ca. 10000, erhältlich gemäß Beispiel 1 oder 2) und 0,2g Cetyltrimethylammoniumbromid wurden bei Umgebungstemperatur in 100 g Chlorbutan gelöst. Bei Umgebungstemperatur wurde 25 ml Natronlauge (2N-Lösung) in einer Minute zugetropft, die Mischung auf 60°C geheizt und 2 Stunden bei 60°C gerührt. Bei Umgebungstemperatur wurde 1 g Allylbromid über ein Septum/Spritze in 1 min zugetropft und die Temperatur wurde auf 80°C angehoben und es wurde 5 Stunden bei dieser Temperatur gerührt. Nach Abkühlung wurde die Produktmischung mit 250 ml Hexan verdünnt und mit 200ml Wasser und danach zweimal mit 200ml Methanol

und noch mal mit 200ml Wasser gewaschen, mit Na2SO4 getrocknet und über Faltenfilter filtriert. Die klare Produkt-Phase wurde am Rotationsverdampfer bei 120°C und 7mbar einrotiert. Austrag: 39g, hellklare und viskose Flüssigkeit.

$^1$H-FT-NMR (500 MHz, 16 Scans, $CD_2Cl_2$) von den Allyl-Gruppen in Polyisobuten 4,49ppm, 2H, d; 5,25 ppm, 1 H, dd; 5,39ppm, 1 H, dd; 6,05ppm, 1 H, multiplett.

Beispiel 4: Umsetzung von PIB10000-Bisphenol mit Acryloylchlorid

50g PIB10000-Bisphenol (Phenol terminiertes PIB mit Mn von ca. 10000, erhältlich gemäß Beispiel 1 oder 2) und 0,2g Cetyltrimethylammoniumbromid wurden bei Umgebungstemperatur in 100g Chlorbutan gelöst. Bei Umgebungstemperatur wurde 25ml Natronlauge (2N-Lösung) in einer Minute zugetropft, die Mischung auf 60°C geheizt, und 2 Stunden bei 60°C gerührt. Bei Umgebungstemperatur wurde 1 g Acryloylchlorid über ein Septum/Spritze in 1 min zugetropft und die Temperatur wurde auf 80°C angehoben und 1 Stunde bei dieser Temperatur gerührt. Nach Abkühlung wurde die Produkt-Mischung mit 250ml Hexan verdünnt und mit 200ml Wasser und danach zweimal mit 200ml Methanol und noch mal mit 200ml Wasser gewaschen, mit Na2SO4 getrocknet und über Faltenfilter filtriert. Die klare Produkt-Phase wurde am Rotationsverdampfer bei 120°C und 7mbar einrotiert. Austrag: 41g, hellklare und viskose Flüssigkeit.

$^1$H-FT-NMR (500 MHz, 16 Scans, $CD_2Cl_2$) von den Acryl-Gruppen in Polyisobuten 5,97ppm, 1 H, d; 6,30ppm, 1 H, dd; 6,54ppm, 1 H, d.

Beispiel 5: Ethoxylierung

275 g Phenol-terminiertes Polyisobuten mit Mw von 5500 g/mol wird mit einem Äquivalent wässriger, 50%-iger KOH-Lösung in einem 2L-Autoklaven aktiviert und die Mischung wird bei 100°C unter 20 mbar zwei Stunden lang entwässert. Anschließend wird der Autoklav dreimal mit Stickstoff gespült, ein Vordruck von 1,3 bar N2 eingestellt und die Temperatur wird auf 120°C erhöht. Die Ethoxylierung findet unter diesem Druck statt, wobei die Temperatur zwischen 120 und 140°C gehalten wird und 6,25 Mol Ethylenoxid (entspricht einem Ethoxylierungsgrad von 125 und MW von 5500 g/mol für PEO-Block) zudosiert werden. Danach wird die Mischung zwischen 120 und 140°C fünf Stunden gerührt, mit Stickstoff gespült und auf Raumtemperatur abgekühlt. Der Ansatz wird mit Essigsäure neutralisiert und das Produkt wird mit NMR und GPC analysiert.

## Patentansprüche

1. Verfahren zur Herstellung von funktionalisierten Polyisobutenen,
bei dem man Isobuten oder ein Isobuten-haltiges Monomerengemisch in Gegenwart einer Lewis-Säure und eines Initiators polymerisiert und
wobei die Polymerisation mit einem Gemisch aus mindestens einem Phenol und mindestens einer Lewissäure und/oder mindestens einer Brönstedsäure abgebrochen wird und wobei optional die terminalen Phenolgruppen derivatisiert oder zu Cyclohexanolsystemen reduziert werden
wobei zum Reaktionsabbruch ein Phenol (I) der Formel

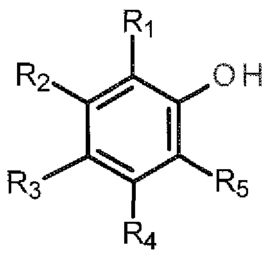

(I),

verwendet wird, worin $R_1$,$R_2$,$R_3$,$R_4$,$R_5$ gleich oder verschieden sind und für Wasserstoff, Alkyl oder Alkoxy stehen mit der Maßgabe, dass mindestens ein ortho- oder paraständiger Rest Wasserstoff ist, wobei wenn mehrere der Reste $R_1$,$R_2$,$R_3$,$R_4$,$R_5$ für Alkyl stehen, dann ist Alkyl ein gesättigter cyclischer Kohlenwasserstoffrest oder Methyl, Ethyl, n-Propyl, Isopropyl, n-Butyl, sec-Butyl, Isobutyl, n-Pentyl, 2-Pentyl, 3-Pentyl, 2-Methylbutyl, 3-Methylbutyl, 3-Methylbut-2-yl, 2-Methylbut-2-yl, 2,2-Dimethylpropyl, n-Hexyl, 2-Hexyl, 3-Hexyl, 2-Me-thylpentyl, 2-Methylpent-3-yl, 2-Methylpent-2-yl, 2-Methylpent-4-yl, 3-Methylpent-2-yl, 3-Methylpent-3-yl, 3-Methylpentyl, 2,2-Dimethylbutyl, 2,2-Dimethylbut-3-yl, 2,3-Di-methyl-but-2-yl, oder 2,3-Dimethylbutyl.

2. Verfahren nach dem vorhergehenden Anspruch, **dadurch gekennzeichnet, dass** die Funktionalität der Polyisobutene mindestens 80% und das zahlenmittlere Molekulargewicht Mn größer 5000 beträgt.

3. Verfahren nach einem der vorhergehenden Ansprüche, **dadurch gekennzeichnet, dass** die terminalen Phenolgruppen verestert oder verethert werden.

4. Verfahren nach einem der vorhergehenden Ansprüche, **dadurch gekennzeichnet, dass** die terminalen Phenolgruppen mit (Meth)acrylsäure verestert oder mit einem Glycidylalkohol verethert werden.

5. Verfahren nach einem der vorhergehenden Ansprüche, **dadurch gekennzeichnet, dass** die Lewis-Säure ausgewählt ist unter Titantetrachlorid, Bortrichlorid, Zinntetrachlorid, Aluminiumtrichlorid, Dialkylaluminiumchloriden, Alkylaluminiumdichloriden, Vanadiumpentachlorid, Eisentrichlorid und Bortrifluorid.

6. Verfahren nach einem der vorhergehenden Ansprüche, **dadurch gekennzeichnet, dass** die Initiatoren den allgemeinen Formeln I-A bis I-F gehorchen:

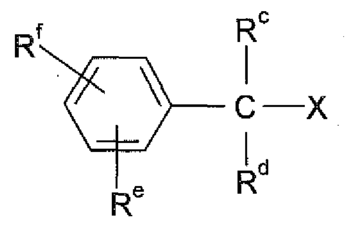

I-A

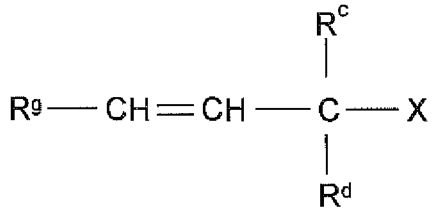

I-B

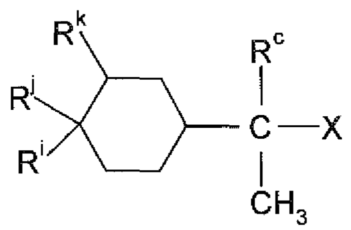

I-C

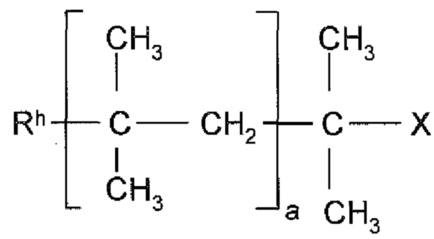

I-D

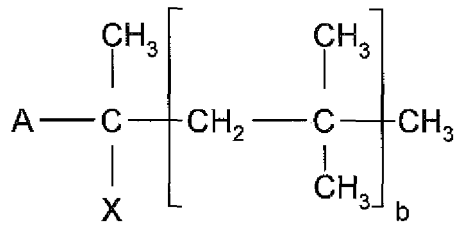

I-E

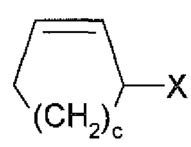

I-F

worin X ausgewählt ist unter Halogen, $C_1$-$C_6$-Alkoxy und $C_1$-$C_6$-Acyloxy;
a und b unabhängig voneinander für 0, 1, 2, 3, 4 oder 5 stehen;
c für 1, 2 oder 3 steht;
$R^c$, $R^d$ und $R^i$ unabhängig voneinander für Wasserstoff oder Methyl stehen;
Re, $R^f$ und $R^g$ unabhängig voneinander für Wasserstoff, $C_1$-$C_4$-Alkyl oder eine Gruppe $CR^cR^d$-X stehen, worin $R^c$, $R^d$ und X die zuvor genannten Bedeutungen haben;
$R^h$ für Wasserstoff, Methyl oder ein Gruppe X steht;

$R^i$ und $R^k$ Wasserstoff oder eine Gruppe X bedeuten; und
A für einen ethylenisch ungesättigten Kohlenwasserstoffrest steht, der eine Vinylgruppe oder eine Cycloalkenylgruppe aufweist.

**7.** Verfahren nach einem der vorhergehenden Ansprüche, wobei die Polymerisation in Gegenwart eines Elektronendonors erfolgt, welcher ausgewählt ist unter Pyridinen, Amiden, Lactamen, Ethern, Aminen, Estern, Thioethern, Sulfoxiden, Nitrilen, Phosphinen und nicht polymerisierbaren, aprotischen siliziumorganischen Verbindungen, die wenigstens einen über Sauerstoff gebundenen organischen Rest aufweisen.

**8.** Verfahren nach einem der vorhergehenden Ansprüche, wobei die Lewis-Säure zum Reaktionsabbruch ausgewählt ist aus $BF_3$, $BCl_3$, $SnCl_4$, $TiCl_4$, $AlCl_3$ oder deren Gemisch.

**9.** Verfahren nach einem der vorhergehenden Ansprüche, wobei die Polymerisation in einem kontinuierlichen Verfahren durchgeführt, welches mindestens die folgenden Schritte umfasst:

(I) Kontinuierliches Eindosieren von Isobuten, Lösungsmittel, Initiator, und optional weiteren Zusätzen in einen Mischer und Vermischen der Edukte in der Mischeinheit, sowie
(II) Start der kontinuierlichen Polymerisation durch kontinuierliches Eindosieren einer Lewissäure und Vermischen mit den Edukten bei Reaktionstemperatur, sowie
(III) Kontinuierliche Polymerisation, indem man das erhaltene Reaktionsgemisch durch mindestens eine auf Reaktionsbedingungen temperierte Reaktionszone hindurchleitet, sowie
(IV) Abbruch der Reaktion durch ein Gemisch von mindestens einem Phenol und mindestens einer Lewissäure und/oder mindestens einer Brönstedsäure.

**10.** Verfahren nach einem der vorhergehenden Ansprüche, wobei eine oder mehrere der terminalen Phenolgruppen derivatisiert sind durch

i) Acrylierung,
ii) Allylierung, wobei die Allylgruppe optional zum Epoxid oxidiert werden kann, oder
iii) Umsetzung mit Epichlorhydrin,

oder zum Cyclohexanolsystem reduziert sind.

**11.** Verfahren nach dem vorhergehenden Anspruch, wobei die zum Cyclohexanolsystem reduzierte Gruppe weiter funktionalisiert ist durch Umsetzung der Polyisobutyl-substituierten Cyclohexanole

a) mit einer olefinisch ungesättigten Mono- oder Dicarbonsäure oder einem Derivat davon und optional anschließender Polymerisation des gebildeten olefinisch ungesättigten Produkts; oder Umsetzung mit dem Polymerisat einer olefinisch ungesättigten Mono- oder Dicarbonsäure oder einem Derivat davon;
(b) mit einem Allylhalogenid und optional anschließender Polymerisation des gebildeten Allylethers;
(c) mit einem Alkylenoxid;
(d) mit einem Isocyanat, einem Diisocyanat oder einem Triisocyanat;
(e) mit einem Kohlensäurederivat oder mit gesättigten oder aromatischen Dicarbonsäuren und Derivaten davon; oder
(f) mit Ammoniak oder einem Amin NR'R", wobei R' für einen $C_1$-$C_{24}$-Alkylrest und R" für einen $C_1$-$C_{24}$-Alkylrest oder H steht.

**12.** Verfahren nach einem der Ansprüche 1 bis 11, wobei eine oder mehrere der terminalen Phenolgruppen derivatisiert sind durch Ethoxylierung.

**13.** Polyisobuten-Polyethylenoxid-Blockcopolymer, erhältlich durch das Verfahren gemäß Anspruch 12.

## Claims

**1.** A process for preparing functionalized polyisobutenes,
in which isobutene or an isobutene-containing monomer mixture is polymerized in the presence of a Lewis acid and of an initiator and

the polymerization is terminated with a mixture of at least one phenol and at least one Lewis acid and/or at least one Brønsted acid and

the terminal phenol groups are optionally derivatized or reduced to cyclohexanol systems wherein the reaction is terminated using a phenol (I) of the formula

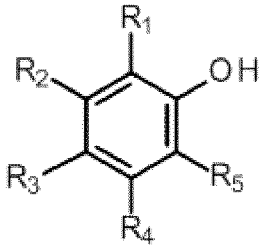

(I)

where $R_1$,$R_2$,$R_3$,$R_4$,$R_5$ are the same or different and are each hydrogen, alkyl or alkoxy, with the proviso that at least one radical in an ortho or para position is hydrogen, where, when two or more of the $R_1$, $R_2$, $R_3$, $R_4$, $R_5$ radicals are alkyl, alkyl is a saturated cyclic hydrocarbyl radical or methyl, ethyl, n-propyl, isopropyl, n-butyl, sec-butyl, isobutyl, n-pentyl, 2-pentyl, 3-pentyl, 2-methylbutyl, 3-methylbutyl, 3-methylbut-2-yl, 2-methylbut-2-yl, 2,2-dimethylpropyl, n-hexyl, 2-hexyl, 3-hexyl, 2-methylpentyl, 2-methylpent-3-yl, 2-methylpent-2-yl, 2-methylpent-4-yl, 3-methylpent-2-yl, 3-methylpent-3-yl, 3-methylpentyl, 2,2-dimethylbutyl, 2,2-dimethylbut-3-yl, 2,3-dimethylbut-2-yl, or 2,3-dimethylbutyl.

2. The process according to the preceding claim, wherein the functionality of the polyisobutenes is at least 80% and the number-average molecular weight Mn is greater than 5000.

3. The process according to either of the preceding claims, wherein the terminal phenol groups are esterified or etherified.

4. The process according to any of the preceding claims, wherein the terminal phenol groups are esterified with (meth)acrylic acid or etherified with a glycidyl alcohol.

5. The process according to any of the preceding claims, wherein the Lewis acid is selected from titanium tetrachloride, boron trichloride, tin tetrachloride, aluminum trichloride, dialkylaluminum chlorides, alkylaluminum dichlorides, vanadium pentachloride, iron trichloride and boron trifluoride.

6. The process according to any of the preceding claims, wherein the initiators obey the general formulae I-A to I-F:

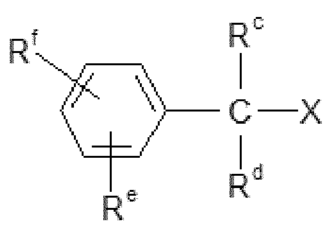

I-A

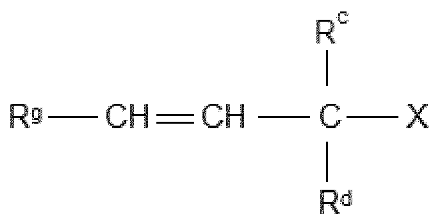

I-B

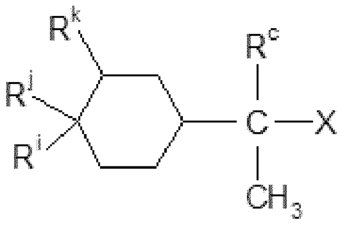

I-C

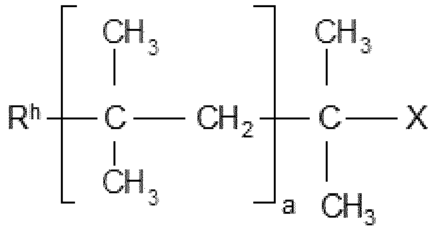

I-D

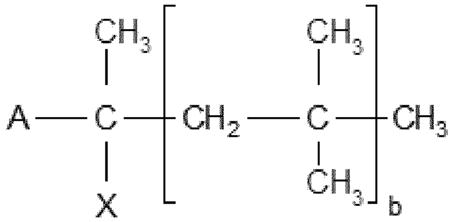

I-E

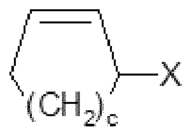

I-F

in which X is selected from halogen, $C_1$-$C_6$-alkoxy and $C_1$-$C_6$-acyloxy;
a and b are each independently 0, 1, 2, 3, 4 or 5;
c is 1, 2 or 3;
$R^c$, $R^d$ and $R^j$ are each independently hydrogen or methyl;
Re, $R^f$ and $R^g$ are each independently hydrogen, $C_1$-$C_4$-alkyl or a $CR^cR^d$-X group in which $R^c$, $R^d$ and X are each as defined above;
$R^h$ is hydrogen, methyl or an X group;
$R^i$ and $R^k$ are each hydrogen or an X group; and
A is an ethylenically unsaturated hydrocarbonyl radical having a vinyl group or a cycloalkenyl group.

**7.** The process according to any of the preceding claims, wherein the polymerization is effected in the presence of an electron donor selected from pyridines, amides, lactams, ethers, amines, esters, thioethers, sulfoxides, nitriles, phosphines and nonpolymerizable aprotic organosilicon compounds having at least one organic radical bonded via oxygen.

**8.** The process according to any of the preceding claims, wherein the Lewis acid for terminating the reaction is selected from $BF_3$, $BCl_3$, $SnCl_4$, $TiCl_4$, $AlCl_3$ or a mixture thereof.

**9.** The process according to any of the preceding claims, wherein the polymerization is performed in a continuous process comprising at least the following steps:

(I) continuous metered addition of isobutene, solvent, initiator and optionally further additions to a mixer and mixing of the reactants in the mixing unit, and
(II) starting the continuous polymerization by continuous metered addition of a Lewis acid and mixing with the reactants at reaction temperature, and
(III) continuous polymerization by passing the resulting reaction mixture through at least one reaction zone under reaction conditions, and
(IV) terminating the reaction by means of a mixture of at least one phenol and at least one Lewis acid and/or at least one Brønsted acid.

**10.** The process according to any of the preceding claims, wherein one or more of the terminal phenol groups are derivatized by

i) acrylation,

ii) allylation, with optional oxidation of the allyl group to the epoxide, or
iii) reaction with epichlorohydrin,

or are reduced to the cyclohexanol system.

**11.** The process according to the preceding claim, wherein the group reduced to the cyclohexanol system has been further functionalized by reaction of the polyisobutyl-substituted cyclohexanols

a) with an olefinically unsaturated mono- or dicarboxylic acid or a derivative thereof and optional subsequent polymerization of the olefinically unsaturated product formed; or reaction with the polymer of an olefinically unsaturated mono- or dicarboxylic acid or a derivative thereof;
(b) with an allyl halide and optionally subsequent polymerization of the allyl ether formed;
(c) with an alkylene oxide;
(d) with an isocyanate, a diisocyanate or a triisocyanate;
(e) with a carbonic acid derivative or with saturated or aromatic dicarboxylic acids and derivatives thereof; or
(f) with ammonia or an amine NR'R", where R' is a $C_1$-$C_{24}$-alkyl radical and R" is a $C_1$-$C_{24}$-alkyl radical or H.

**12.** The process according to any of claims 1 to 11, wherein one or more of the terminal phenol groups are derivatized by ethoxylation.

**13.** A polyisobutene-polyethylene oxide block copolymer obtainable by the process according to claim 12.

**Revendications**

**1.** Procédé de fabrication de polyisobutènes fonctionnalisés, selon lequel de l'isobutène ou un mélange de monomères contenant de l'isobutène est polymérisé en présence d'un acide de Lewis et d'un initiateur, et
la polymérisation est interrompue avec un mélange d'au moins une phénol et d'au moins un acide de Lewis et/ou d'au moins un acide de Brönsted, et les groupes phénol terminaux sont éventuellement dérivés ou réduits en systèmes cyclohexanol,
un phénol (I) de formule

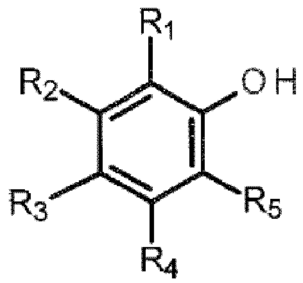

(I),

étant utilisé pour l'interruption de la réaction, dans laquelle $R_1$, $R_2$, $R_3$, $R_4$, $R_5$ sont identiques ou différents, et représentent hydrogène, alkyle ou alcoxy, à condition qu'au moins un radical en position ortho ou para soit l'hydrogène ; lorsque plusieurs des radicaux $R_1$, $R_2$, $R_3$, $R_4$, $R_5$ représentent un alkyle, alors l'alkyle est un radical hydrocarboné cyclique saturé ou méthyle, éthyle, n-propyle, isopropyle, n-butyle, sec-butyle, isobutyle, n-pentyle, 2-pentyle, 3-pentyle, 2-méthylbutyle, 3-méthylbutyle, 3-méthylbut-2-yle, 2-méthylbut-2-yle, 2,2-diméthylpropyle, n-hexyle, 2-hexyle, 3-hexyle, 2-méthylpentyle, 2-méthylpent-3-yle, 2-méthylpent-2-yle, 2-méthylpent-4-yle, 3-méthylpent-2-yle, 3-méthyl-pent-3-yle, 3-méthylpentyle, 2,2-diméthylbutyle, 2,2-diméthylbut-3-yle, 2,3-di-méthyl-but-2-yle ou 2,3-diméthylbutyle.

**2.** Procédé selon la revendication précédente, **caractérisé en ce que** la fonctionnalité des polyisobutènes est d'au moins 80 % et le poids moléculaire moyen en nombre Mn est supérieur à 5 000.

**3.** Procédé selon l'une quelconque des revendications précédentes, **caractérisé en ce que** les groupes phénol terminaux sont estérifiés ou éthérifiés.

**4.** Procédé selon l'une quelconque des revendications précédentes, **caractérisé en ce que** les groupes phénol terminaux sont estérifiés avec de l'acide (méth)acrylique ou éthérifiés avec un alcool glycidylique.

**5.** Procédé selon l'une quelconque des revendications précédentes, **caractérisé en ce que** l'acide de Lewis est choisi parmi le tétrachlorure de titane, le trichlorure de bore, le tétrachlorure d'étain, le trichlorure d'aluminium, les chlorures de dialkylaluminium, les dichlorures d'alkylaluminium, le pentachlorure de vanadium, le trichlorure de fer et le trifluorure de bore.

**6.** Procédé selon l'une quelconque des revendications précédentes, **caractérisé en ce que** les initiateurs obéissent aux formules I-A à I-F suivantes :

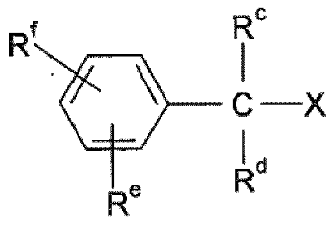

I-A

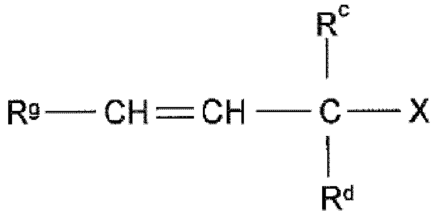

I-B

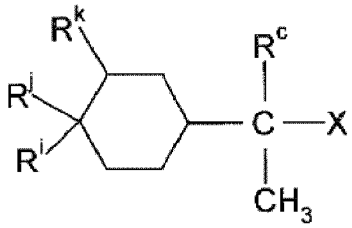

I-C

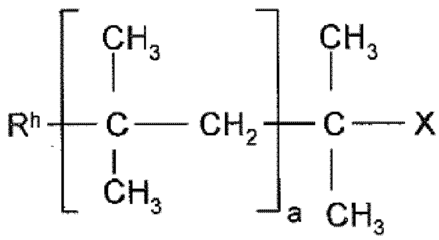

I-D

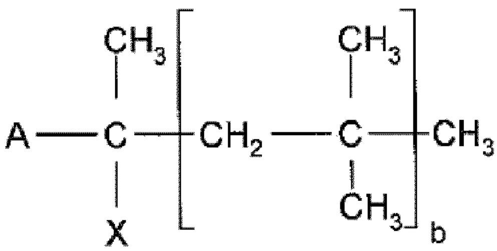

I-E

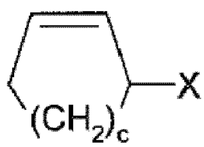

I-F

dans lesquelles X est choisi parmi halogène, alcoxy en $C_1$-$C_6$ et acyloxy en $C_1$-$C_6$ ;
a et b représentent indépendamment l'un de l'autre 0, 1, 2, 3, 4 ou 5 ;
c représente 1, 2 ou 3 ;
$R^c$, $R^d$ et $R^j$ représentent indépendamment les uns des autres hydrogène ou méthyle ;
$R^e$, $R^f$ et $R^g$ représentent indépendamment les uns des autres hydrogène, alkyle en $C_1$-$C_4$ ou un groupe $CR^cR^d$-X, $R^c$, $R^d$ et X ayant les significations indiquées précédemment ;
$R^h$ représente hydrogène, méthyl ou un groupe X ;
$R^i$ et $R^k$ signifient hydrogène ou un groupe X ; et
A représente un radical hydrocarboné éthyléniquement insaturé, qui comprend un groupe vinyle ou un groupe cycloalcényle.

**7.** Procédé selon l'une quelconque des revendications précédentes, dans lequel la polymérisation a lieu en présence d'un donneur d'électrons, qui est choisi parmi les pyridines, les amides, les lactames, les éthers, les amines, les esters, les thioéthers, les sulfoxydes, les nitriles, les phosphines et les composés organiques de silicium aprotiques non polymérisables, qui comprennent au moins un radical organique relié par un oxygène.

**8.** Procédé selon l'une quelconque des revendications précédentes, dans lequel l'acide de Lewis pour l'interruption de la réaction est choisi parmi $BF_3$, $BCl_3$, $SnCl_4$, $TiCl_4$, $AlCl_3$ ou leur mélange.

**9.** Procédé selon l'une quelconque des revendications précédentes, dans lequel la polymérisation est réalisée par un procédé continu, qui comprend au moins les étapes suivantes :

(I) l'introduction continue d'isobutène, de solvant, d'initiateur et éventuellement d'autres additifs dans un mélangeur et le mélange des réactifs dans l'unité de mélange, et
(II) le début de la polymérisation continue par ajout continu d'un acide de Lewis et mélange avec les réactifs à la température de réaction, et
(III) la polymérisation continue par passage du mélange réactionnel obtenu dans au moins une zone de réaction conditionnée dans les conditions de réaction, et
(IV) l'interruption de la réaction par un mélange d'au moins un phénol et d'au moins un acide de Lewis et/ou d'au moins un acide de Brönsted.

**10.** Procédé selon l'une quelconque des revendications précédentes, dans lequel un ou plusieurs des groupes phénol terminaux sont dérivés par

i) acrylation,
ii) allylation, le groupe allyle pouvant éventuellement être oxydé en époxyde, ou
iii) réaction avec de l'épichlorhydrine,

ou sont réduits en un système cyclohexanol.

**11.** Procédé selon la revendication précédente, dans lequel le groupe réduit en un système cyclohexanol est davantage fonctionnalisé par mise en réaction des cyclohexanols à substitution polyisobutyle

(a) avec un acide mono- ou dicarboxylique oléfiniquement insaturé ou un dérivé de celui-ci, puis éventuellement polymérisation du produit oléfiniquement insaturé formé ; ou mise en réaction avec le polymère d'un acide mono- ou dicarboxylique oléfiniquement insaturé ou un dérivé de celui-ci ;
(b) avec un halogénure d'allyle, puis éventuellement polymérisation de l'éther allylique formé ;
(c) avec un oxyde d'alkylène ;
(d) avec un isocyanate, un diisocyanate ou un triisocyanate ;
(e) avec un dérivé d'acide carbonique ou avec des acides dicarboxyliques saturés ou aromatiques et leurs dérivés ; ou
(f) avec de l'ammoniac ou une amine NR'R", R' représentant un radical alkyle en $C_1$-$C_{24}$ et R" représentant un radical alkyle en $C_1$-$C_{24}$ ou H.

**12.** Procédé selon l'une quelconque des revendications 1 à 11, dans lequel un ou plusieurs des groupes phénol terminaux sont dérivés par éthoxylation.

**13.** Copolymère séquencé de polyisobutène-polyoxyde d'éthylène, pouvant être obtenu par le procédé selon la revendication 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2005107551 A1, Lang Gabriele
- US 4429099 A
- US 5300701 A
- WO 0248215 A
- WO 03074577 A
- WO 2004113402 A
- US 4946889 A
- US 4327201 A
- US 5169914 A
- EP 206756 A
- EP 265053 A
- WO 06119931 A1


### In der Beschreibung aufgeführte Nicht-Patentliteratur


- **KENNEDY ; IVAN.** Carbocationic Macromolecular Engineering. Hauser Publishers, 1992
- End-Quenching of TiCl4-catalyzed Quasiliving Polyisobutene with Alkoxybenzenes for Direct Chain End Functionalzation. **DAVID L. MORGAN et al.** Macromolecules. American Chemical Society, 09. November 2010, vol. 43, 8724-8740
- **IVAN ; KENNEDY ; CHANG.** *J.Polym. Sci. Polym. Chem. Ed.,* 1980, vol. 18, 3177
- **J.M.ROONEY.** Synthesis of phenol-terminated polyisobutylene: Competitive chain transfer reactions. *Journal of Applied Polymer Science,* 01. Juli 1980, vol. 25 (7), 1365-1372
- **NGUYEN ; MARECHAL.** *Polym.Bull.,* 1984, vol. 11, 99-104
- **J.P. KENNEDY ; B. IVAN.** Designed Polymers by Carbocationic Macromolecular Engineering. Oxford University Press, 1991
- Chemische Reaktionstechnik. **M. BAERNS ; H. HOFMANN ; A. RENKEN.** Lehrbuch der Technischen Chemie. vol. 1, 332 ff
- Chemische Reaktionstechnik. **M. BAERNS ; H. HOFMANN ; A. RENKEN.** Lehrbuch der Technischen Chemie. vol. 1, 339 ff